# EUROPÄISCHE PATENTANMELDUNG

(11) **EP 4 088 570 A1**
(43) Veröffentlichungstag der Anmeldung: **16.11.2022**
(21) Anmeldenummer: 22172814.0
(22) Anmeldetag: 11.05.2022
(51) Int. Cl.: A01K 15/02, A23K 50/45, A23L 3/10, B65D 75/42, A23K 10/20, A23K 10/30, A23L 3/015

(54) **VERFAHREN ZUR HERSTELLUNG UND HALTBARMACHUNG EINES HALBFEUCHTEN TIERNAHRUNGSMITTELS UND HALBFEUCHTES TIERNAHRUNGSMITTEL IN EINER IM WESENTLICHEN GASDICHTEN VERPACKUNGSEINHEIT**

(30) Priorität: 12.05.2021 DE 102021112385
(71) Anmelder: Tiernahrung Deuerer GmbH, 75015 Bretten (DE)
(72) Erfinder: DEUERER, Hans-Jürgen, 75015 Bretten (DE)
(74) Vertreter: Gramm, Lins & Partner Patent- und Rechtsanwälte PartGmbB

(57) **Zusammenfassung**

Die vorliegende Erfindung betrifft ein Verfahren zur Herstellung und Haltbarmachung eines halbfeuchten Tiernahrungsmittels, wobei dieses sich dadurch auszeichnet, dass es die Schritte des Trocknens und Haltbarmachens durch thermische Behandlung und Druckbehandlung des haltbaren halbfeuchten Tiernahrungsmittels verpackt in einer Verpackungseinheit umfasst. In einem weiteren Aspekt richtet sich die vorliegende Erfindung auf ein so erhältliches halbfeuchtes Tiernahrungsmittel verpackt in einer im wesentlichen gasdichten Verpackungseinheit mit verbessertem Lagereigenschaften, insbesondere Lagerungsbeständigkeit. Schließlich werden Verkaufseinheiten, umfassend mehrere ggf. voneinander lösbare Verpackungseinheiten enthaltend das halbfeuchte Tiernahrungsmittel bereitgestellt.

## Beschreibung

Die vorliegende Erfindung betrifft ein Verfahren zur Herstellung und Haltbarmachung eines halbfeuchten Tiernahrungsmittels, wobei dieses sich dadurch auszeichnet, dass es die Schritte des Trocknens und Haltbarmachens durch thermische Behandlung und Druckbehandlung des haltbaren halbfeuchten Tiernahrungsmittels, verpackt in einer Verpackungseinheit, umfasst. In einem weiteren Aspekt richtet sich die vorliegende Erfindung auf ein so erhältliches halbfeuchtes Tiernahrungsmittel in einer im wesentlichen gasdichten Verpackungseinheit mit verbesserten Lagereigenschaften, insbesondere Lagerungsbeständigkeit, verpackt. Schließlich werden Verkaufseinheiten, umfassend mehrere ggf. voneinander lösbare Verpackungseinheiten, enthaltend das halbfeuchte Tiernahrungsmittel, bereitgestellt.

### Stand der Technik

Tiernahrungsmittel werden als Frischfutter aber auch als lagerfähige Tiernahrung verlangt und angeboten. Dieses gilt nicht nur für trockene Tiernahrung, sondern auch für halbfeuchte und feuchte Tiernahrung. Insbesondere für halbfeuchte und feuchte Tiernahrung ist aber die Haltbarmachung zur verbesserten Lagerung schwierig, da aufgrund des vorliegenden Feuchtigkeitsgehalts die Lagerstabilität verringert ist.

Im Tiernahrungsbereich wird unterschieden zwischen i) einem Nassfutter mit einem Feuchtegehalt von 50 Gew.-% oder größer, ii) semi-moist oder halbfeuchten Produkten mit einem Feuchtegehalt von unter 50 Gew.-% bis über 15 Gew.-%, und iii) Trockenprodukten mit einem Feuchtegehalt von bis zu 15 Gew.-%.

Nassfutter ist definiert als Futter mit Feuchtegehalten von 50 Gew.-% oder größer und wird üblicherweise hergestellt durch Zusammenstellen, Zerkleinern und Vermischen der Komponenten, wobei die Komponenten fleischliche Komponenten und Trockenstoffe, aber auch Hydrokolloide, Mineralstoffe, Vitamine, etc., umfassen. Nach dem Zerkleinern z. B. mit Hilfe eines Cutters erhält man eine als Brät bezeichnete homogene Masse. Eine solche Masse wird z. B. in einem sogenannten Dampftunnel zu Strängen ausgeformt und anschließend mit einer flüssigen Komponente, z. B. einer Sauce etc. abgefüllt. Das Brät kann auch direkt in die Verpackung eingebracht werden. Diese Brätmischungen für Nassfutter mit oder ohne einer Vorbehandlung, z. B. in einem Dampftunnel, und mit oder ohne Sauce werden in Verpackungen wie Schalen, Dosen, Standbeutel abgefüllt und diese entweder mittels Wärme oder Ultraschall so versiegelt, dass sie absolut dicht verschlossen sind. Solche verschlossenen Verpackungen werden zur Sterilisation in einen Autoklaven gebracht und in Temperaturbereichen zwischen 125 °C und 130 °C mit verschiedenen Haltezeiten sterilisiert. Im Rahmen dieser Sterilisation zur Verbesserung der Haltbarkeit werden Keime, wie Salmonellen, aerobe und andere anaerobe Keime, abgetötet, die Rezeptur enthält dabei üblicherweise keine Konservierungsmittel, wie Kaliumsorbat. Während dieser Sterilisation findet eine Veränderung der Struktur, der Schnittfestigkeit, des Geschmacks, etc. statt. Die Sterilisation ist somit ein notwendiger Verfahrensschritt bei Nassfutter, um das Endprodukt zu erhalten. Darüber hinaus setzt diese Sterilisation voraus, dass eine hermetisch versiegelte Verpackung vorliegt, wie Konserven oder Schalen, damit die Feuchtigkeit des Nassfutters von über 50 Gew.-% erhalten bleibt. Ohne diese Voraussetzung ist es unmöglich ein Feuchtfutter auf den Markt zu bringen, die Verpackung würde ohne Sterilisation aufblähen und spätestens nach 24 Stunden platzen.

Halbfeuchte Tiernahrungsmittel bzw. semi-moist Nahrungsmittel mit Feuchtegehalten von unter 50 Gew.-% bis über 15 Gew.-% werden ebenfalls als homogene Masse, dem Brät, mit den Inhaltsstoffen bereitgestellt. Diese Inhaltsstoffe beinhalten üblicherweise neben den fleischlichen Komponenten, Trockenstoffen und weiteren Hilfsstoffen, wie Hydrokolloide, Mineralstoffe und Vitamine, auch Konservierungsstoffe und Antioxidantien, um die Haltbarkeit zu erhöhen.

Bei üblichen Herstellungsverfahren wird das erhaltene Brät ausgeformt und im Trocknungsofen auf den gewünschten Feuchtegehalt, üblicherweise bei Temperaturen von 80 °C und 90 °C, gebracht. Diese vorgetrockneten Produkte werden dann entsprechend in die gewünschten Produktgrößen gebracht und mit Folie verpackt. Solche Folien werden gemäß den üblichen Verfahren versiegelt und stellen das verkaufsfähige Produkt dar, bei dem die gewünschten Eigenschaften, wie Schnittfestigkeit, Struktur, Geschmack, etc. des Endprodukts vorliegen. Die für Nassfutter bekannten Probleme, z. B. das Aufblähen und Aufplatzen dieser so vorliegenden verkaufsfähigen Verpackungen existieren nicht.

Übliche halbfeuchte Produkte, wie sie derzeit auf dem Markt sind, weisen Feuchtegehalte von unter 30 Gew.-% auf, meist im Bereich zwischen 25 und 30 Gew.- %. Gerade diesen halbfeuchten Produkten mangelt es an Haltbarkeit und Lagerstabilität. Sie sind meist nur wenige Monate lagerfähig und haltbar, bevor sie verderben. Um die Haltbarkeit zu erhöhen werden daher häufig große Mengen an Konservierungsmitteln zugefügt. Allerdings ist die Zugabe von Konservierungsmitteln aus vielen Gründen nicht erwünscht und teilweise sind Konservierungsmittel für Tiere, wie Natriumnitrit bei Hunden, unverträglich.

Katzen und Hunde sind karnivore Spezies, die sich in der Natur hauptsächlich von Fleisch, insbesondere von Beutetieren, ernähren. Fleisch und Fisch, d. h., tierische Proteine sind außerdem hohe Akzeptanzträger, bezogen auf das Fressverhalten der Tiere. Daher ist es ernährungsphysiologisch sinnvoll, ein Futtermittel mit hohem Fleischgehalt, ggf. angereichert mit Fisch, und damit einem hohen Gehalt an tierischen Proteinen bereitzustellen, das ggf. gleichzeitig weitere Inhaltsstoffe aufweisen kann. Es wird allgemein gewünscht, die Produkte, sowohl als Hauptmahlzeit als auch in Form von Snacks, als halbfeuchte oder feuchte Futtermittel auf Fleischbasis bereitzustellen. Neben der Eigenschaft als Nahrungsmittel erlauben diese Snacks auch die Übernahme weiterer Funktionen, wie Gebisspflege, aber auch zu Erziehungs- und Ausbildungszwecken können sie genutzt werden.

Bisher ist es Stand der Technik, dass solche haltbaren halbfeuchten Tiernahrungsmittel einen hohen Gehalt an Konservierungsmitteln aufweisen oder andere Zusatzstoffe, wie Phosphate, etc., die neben der Haltbarmachung auch eine entsprechend optische Bereitstellung des Produkts erlauben, wie eine entsprechende Rötung des Fleisches etc. Häufig weisen solche halbfeuchten, haltbar gemachten Tiernahrungsmittel, wie Snacks, einen Anteil an Konservierungsmitteln von üblicherweise 0,1% bis 1% des Gesamtgewichts auf, hierbei werden z. B. Kaliumsorbat oder andere bekannte Konservierungsmittel eingesetzt, die dann eine Mindesthaltbarkeit des Produktes von 15 bis 18 Monaten erlauben.

Hierbei ist zu beachten, dass gemäß den für die Futtermittelindustrie zugelassenen Zusatzstoffe als Konservierungsmittel Stoffe wie Kaliumsorbat, Natriumbisulfit, oder Kaliumdiformiat und andere Mittel als Konservierungsmittel beschrieben sind, siehe Futtermittelverordnung in der jeweils geltenden Fassung; hingegen Natriumchlorid oder andere Halogensalze als Mineralstoffe gemäß Futtermittelrecht anzusehen sind. Neben der entsprechenden Akzeptanz der Futtermittel, z. B. in Form von Snacks oder Sticks, mit einer entsprechend ansprechenden Optik, ist die Haltbarkeitsmachung und die Mindesthaltbarkeit ein wesentlicher Aspekt. Hierbei wird vom Verbraucher immer mehr gefordert, dass die Inhaltsstoffe möglichst natürlichen Ursprungs sind und Inhaltsstoffe wie Konservierungsmittel etc. gering oder, wenn möglich, gar nicht vorhanden sind.

Aufgabe der vorliegenden Erfindung ist es somit halbfeuchte Tiernahrungsmittel bereitzustellen, die eine lange Haltbarkeit aufweisen, wobei diese halbfeuchten Tiernahrungsmittel im Wesentlichen ohne Zusätze, insbesondere ohne Zugabe von Konservierungsmitteln, hergestellt sind.

### Beschreibung der Erfindung

Überraschend zeigte sich, dass eine Kombination bekannter technischer Verfahren die Bereitstellung von halbfeuchten Tiernahrungsmitteln mit hervorragenden Mindesthaltbarkeitseigenschaften und ansprechender Optik erlaubt, wobei diese Tiernahrungsmittel in einer Ausführungsform einen hohen Anteil Fleisch und tierischer Nebenprodukte aufweisen, und wobei die erfindungsgemäßen Tiernahrungsmittel in einer Ausführungsform insbesondere einen geringen Anteil von Konservierungsmitteln, insbesondere keine Konservierungsmittel, aufweisen.

In einem ersten Aspekt wird ein Verfahren zur Herstellung und Haltbarmachung eines halbfeuchten Tiernahrungsmittels, umfassend die Schritte:
a. Bereitstellen eines Tiernahrungsmittel-Vorprodukts;
b. Zerkleinern und Ausformen des Tiernahrungsmittel-Vorprodukts und gegebenenfalls Trocknen des ausgeformten Tiernahrungsmittel-Vorprodukts, um ein halbfeuchtes Tiernahrungsmittel mit einem Feuchtegehalt von > 15 Gew.-% und < 50 Gew.-% zu erhalten;
c. Verpacken des halbfeuchten Tiernahrungsmittels in einer im Wesentlichen gasdichten Verpackungseinheit;
d. Haltbarmachen durch thermische Behandlung und ggf. Druckbehandlung, zum Erhalt eines in einer Verpackungseinheit vorliegenden haltbaren halbfeuchten Tiernahrungsmittels, bereitgestellt.

In einer Ausführungsform ist das Tiernahrungsmittel-Vorprodukt eines, das umfassend mindestens 50% Fleisch oder tierische Nebenprodukte, wie mindestens 70 Gew.-%, z. B. mindestens 80 Gew.-%, mindestens 90 Gew.-%, mindestens 95 Gew.-%, wie mindestens 98 Gew.-%. In einer anderen Ausführungsform ist das Tiernahrungsmittel-Vorprodukt eines, das im Wesentlichen aus Gemüse oder Gemüsebestandteilen besteht. Das heißt, die Anteile an Gemüse und Gemüsebestandteilen sind dabei mindestens 50 Gew.-%, wie mindestens 70 Gew.-%, z. B. mindestens 80 Gew.-%, mindestens 90 Gew.-%, mindestens 95 Gew.-%, wie mindestens 98 Gew.-%.

In einer weiteren Ausführungsform ist das Tiernahrungsmittel-Vorprodukt eines auf Basis von Insekten oder Insektenbestandteilen. Das heißt, ein wesentlicher Anteil des Tiernahrungsmittel-Vorprodukts, wie mindestens 50 Gew.-%, z. B. 70 Gew.-%, 80 Gew.-%, wie mindestens 90 Gew.-%, mindestens 95 Gew.-%, z. B. mindestens 98 Gew.-% besteht aus Insekten oder Insektenbestandteilen.

In einer weiteren Ausführungsform ist das Tiernahrungsmittel-Vorprodukt eines auf Basis von Fisch oder Fischnebenerzeugnissen. Das heißt, ein wesentlicher Anteil des Tiernahrungsmittel-Vorprodukts, wie mindestens 50 Gew.-%, z. B. 70 Gew.-%, 80 Gew.-%, wie mindestens 90 Gew.-%, mindestens 95 Gew.-%, z. B. mindestens 98 Gew.-% besteht aus Fisch oder Fischnebenerzeugnissen.

In einer Ausführungsform kann das Tiernahrungsmittel-Vorprodukt eines sein, das im Wesentlichen aus Proteinen-, Fett-, und Kohlenhydratquellen aufgebaut ist, wie den oben genannten allein oder in Kombination. In einer Ausführungsform ist das Tiernahrungsmittel-Vorprodukt eines, das im Wesentlichen aus nicht-tierischen Protein-, Fett-, oder Kohlenhydratquellen besteht.

Erfindungsgemäß kann das Tiernahrungsmittel-Vorprodukt auch eine Mischung aus Fleisch und tierischen Nebenerzeugnissen, Fisch und Fischnebenerzeugnissen, Gemüse und/oder Insekten bzw. Bestandteilen dieser genannten Produkte sein.

Dieses Verfahren ist insbesondere eines, bei dem durch Hitzesterilisation, z.B. durch Dampf oder Wasser, eines getrockneten halbfeuchten Tiernahrungsmittels, das vor Hitzesterilisation in einer im wesentlichen gasdichten Verpackungseinheit verpackt ist, die Haltbarkeit erhöht und die Optik des Produkts verbessert wird.

In einem weiteren Aspekt wird dieses halbfeuchte Tiernahrungsmittel, verpackt in einer im Wesentlichen gasdichten Verpackungseinheit, erhältlich gemäß dem erfindungsgemäßen Verfahren bereitgestellt. Dieses zeichnet sich durch eine verbesserte Mindesthaltbarkeit von z. B. mindestens 18 Monaten wie mindestens 20 Monaten aus und liegt z. B. in Form eines Sticks, wie eines Kausticks, vor.

Entsprechend werden Verpackungseinheiten mit im Wesentlichen gasdichten verpackten, halbfeuchten Tiernahrungsmitteln z. B. in Form eines Sticks bereitgestellt. Weiterhin werden Verkaufseinheiten umfassend mehrere ggf. voneinander lösbare verbundene Verpackungseinheiten beschrieben, wobei diese Verpackungseinheiten einzelne halbfeuchte Tiernahrungsmittelprodukte erhältlich gemäß der vorliegenden Erfindung aufweisen.

Unter einem "halbfeuchten Tiernahrungsmittel" wird ein Tiernahrungsmittel verstanden, das einen Feuchtegehalt von > 15 Gew.-% bis < 50 Gew.-% Wasser bezogen auf das Gesamtgewicht des Tiernahrungsmittels aufweist. Üblicherweise wird die Feuchte dabei bestimmt mittels Trocknung bei 103°C wie in der Verordnung (EC) 152/2009, Abschnitt III, A, zuletzt geändert 2017 - 05, beschrieben. Unter "Fleisch" werden alle Fleischteile geschlachteter warmblütiger Landtiere, frisch oder durch ein geeignetes Verfahren haltbar gemacht, sowie aus Tierfutterverarbeitung erhaltene Erzeugnisse und verarbeitete Tierkörper verstanden. Soweit nicht anders ausgeführt, umfasst der Ausdruck "Fleisch" sowohl Fleisch als auch tierische Nebenprodukte.

Unter "Gemüse" wird vorliegend verstanden, dass Gemüse in seiner Gesamtheit oder Teile des Gemüses als Produkt eingesetzt wird. Üblicherweise ist das Gemüse dabei aufbereitet, d. h., zerkleinert, z. B. gepulvert oder in ähnlicher Art und Weise zerkleinert. Gemüse kann dabei eine Sorte von Gemüse beinhalten oder kann eine Vielzahl von verschiedenen Gemüsen aufweisen. Gemüse schließt einzelne Bestandteile eines Gemüses ein, z. B. bei Erbsen die entsprechenden Erbsenschoten einschließlich den Erbsen oder nur die Erbsen. Gleiches gilt für andere Gemüse.

In einer Ausführungsform wird dabei das Gemüse in fester Form zugeführt, z. B. in pulverisierter, granulierter oder gefriergetrockneter Form oder ähnlichem. Unter den Ausdruck "Gemüse" fallen auch entsprechende Trockenpulver oder Aufreinigungsformen oder Extrakte und Konzentrate von Gemüse, wie Stärke oder Protein oder ähnliches.

Unter "Insekten" werden vorliegend Insekten oder Bestandteile von Insekten verstanden. Es können eine Mischung verschiedener Arten von Insekten oder Insektenbestandteilen eingesetzt werden. Diese Bestandteile schließen aufgereinigte Bestandteile, wie Proteine oder Stärke aus Insekten ein. Üblicherweise werden diese Vorprodukte in fester Form, z. B. pulverisierter, granulierter oder gefriergetrockneter Form, ggf. bereits zerkleinert, bereitgestellt.

Die Ausgangsmaterialien können vollständig oder teilweise gefroren eingesetzt werden, z. B., gefrorenes oder frisches Fleisch können so gemischt werden, dass sich eine gekühlte Mischung ergibt. Es kann jedoch ausschließlich mit gefrorenem und nicht-gefrorenem Ausgangsmaterial gearbeitet werden.

Alternativ kann das Tiernahrungsmittel-Vorprodukt eines sein, das eine entsprechende Zusammenstellung von Protein-, Fett- und/oder Kohlenhydratquellen aufweist. Dabei können diese Quellen tierischen (einschließlich Fisch) oder pflanzlichen Ursprungs sein, einschließlich der Quellen aus Insekten.

In einer Ausführungsform ist das Tiernahrungsmittel-Vorprodukt eines, das mindestens aus 50 Gew.-%, wie mindestens 70 Gew.-%, mindestens 80 Gew.-%, mindestens 90 Gew.-%, wie mindestens 93 Gew.-%, z. B. mindestens 95 Gew.-%, wie mindestens 97 Gew.-%, z. B. mindestens 98 Gew.-% dieses entsprechenden Tiernahrungsmittel-Vorprodukts besteht.

Das erfindungsgemäße Verfahren ist dabei eines, wobei ein Vorprodukt zur Herstellung des Tiernahrungsmittels bereitgestellt wird. Dieses umfasst dabei mindestens 50 Gew.-%, wie mindestens 70 Gew.-%, mindestens 80 Gew.-%, wie mindestens 90 Gew.-% Fleisch, Fisch, Gemüse oder Insekten als Hauptkomponente. Dieses Fleisch, das ggf. mit weiteren Bestandteilen versetzt wird, wird anschließend zerkleinert und ausgeformt. Zerkleinern und Ausformen können gemäß bekannter Verfahren erfolgen. Zum Beispiel erfolgt das Zerkleinern mittels eines Kutters, wie z. B. in der EP 3 145 323 B1 beschrieben oder mittels eines Feinstzerkleinerers. Neben dem Fleisch kann das Tiernahrungsmittel-Vorprodukt vor dem Zerkleinern, z. B. durch Kuttern oder Feinstzerkleinern, weiterhin Stärke, Aromastoffe und Zusatzstoffe sowie andere Trockenstoffe wie Erbsenpulver oder Erbsenstärke aber auch Kochsalz aufweisen. In einer bevorzugten Ausführungsform werden keine Konservierungsstoffe hinzugefügt.

Hierbei wird noch einmal hervorgehoben, dass unter Konservierungsstoffe solche Stoffe verstanden werden, wie sie gemäß Futtermittelverordnung als konservierende Stoffe bezeichnet werden. Mineralstoffe, wie Natriumchlorid, stellen keine im Tiernahrungsmittelbereich definierten Konservierungsstoffe dar.

Bei dem Zerkleinern wird in einer Ausführungsform eine Emulsion des Vorprodukts aus den genannten Inhaltsstoffen gebildet und diese Emulsion wird dann ausgeformt z. B. auf einem Gitter. Das Ausformen kann gemäß bekannter Verfahren erfolgen.

In einer Ausführungsform wird vor dem Ausformen keine Anwendung von Hitze durchgeführt. Unter dem Ausdruck "Anwendung von Hitze" wird vorliegend verstanden, dass keine Wärme dem Vorprodukt vor oder während des Ausformens zugeführt wird bzw. diese Wärme durch Druck erzeugt wird. Die Ausformung findet bei Temperaturen von 1°C bis 30°C statt, wie z. B. 15°C bis 25°C.

Unter "kuttern" bzw. "Kutter" wird vorliegend verstanden, dass die im Kutter vorliegenden Bestandteile fein- und feinstzerkleinert werden. D. h., die Formgrößenverteilung liegt im Bereich von 10mm bis 0,1mm oder kleiner. Das Kuttern zeichnet sich durch einen Prozess aus, bei dem bei möglichst vielen Zellen die Zellmembranen geschädigt werden, um so eine feine und gleichmäßige Masse zu erhalten. Dem Fachmann sind entsprechende "Kutter" bekannt, dabei werden die Messer z. B. bei einer Geschwindigkeit von 60 Umdrehungen/min, wie z. B. mindestens 200 Umdrehungen/min, wie z. B. 2800 Umdrehungen/min betrieben. Es findet eine zumindest teilweise Denaturierung der Proteine während des Kutterns statt. Üblicherweise erhält man hierdurch eine Emulsion.

Unter Feinstzerkleinern wird vorwiegend verstanden, dass die vorliegenden Bestandteile fein- und feinstzerkleinert werden. D.h. die Formgrößenverteilung liegt im Bereich von 10mm bis 0,1mm oder kleiner. Das Feinstzerkleinern zeichnet sich durch einen Prozess aus, bei dem das Produkt zuerst vorzerkleinert wird. Die Feinstzerkleinerung erfolgt z.B. über ein separates Schneidesystem. Der Schneidesatz besteht z.B. aus einem mit einer Welle rotierendem Messerkopf und einer im Schneidegehäuse fixierten, austauschbaren Lochplatte. Der Feinheitsgrad wird im Wesentlichen von den Bohrungen der Lochplatte bestimmt, durch die die Masse gepresst wird.

Ein Trocknen, wenn notwendig, kann dabei gemäß bekannter Verfahren erfolgen. Üblicherweise erfolgt ein Trocknen bei erhöhten Temperaturen, wie bei über 50°C, z. B. bei 70°C oder mehr, z. B. im Bereich von 70°C bis 100°C, z. B. 80°C bis 90°C. Dabei wird der gewünschte Feuchtegehalt eingestellt. Dieser Feuchtegehalt liegt dabei in dem Feuchtegehalt eines halbfeuchten Tiernahrungsmittel, nämlich im Bereich von > 15 Gew.-% und unter 50 Gew.-%. Sollte bereits das zerkleinerte und ausgeformte Tiernahrungsmittel-Vorprodukt diesen Feuchtigkeitsgehalt aufweisen, so ist eine umfängliche Trocknung nicht notwendig. Entsprechend ist der Trocknungsschritt optional. Dem Fachmann sind die entsprechenden üblichen Trocknungsmöglichkeiten von solchen Tiernahrungsmittel-Vorprodukten zur Bereitstellung halbfeuchter Tiernahrungsmittel bekannt.

Das Zerkleinern, Ausformen und ggf. Trocknen kann dabei derart erfolgen, dass ein Trocknen, sollte das halbfeuchte Tiernahrungsmittel nach dem Zerkleinern und Ausformen noch einen Feuchtegehalt von mehr als 50 Gew.-% aufweisen, erfolgt. Dabei kann vor dem Trocknen oder nach dem Trocknen das Portionieren des Tiernahrungsmittels erfolgen. Das heißt, eine Portionierung kann nach dem Ausformen erfolgen, sodass diese portionierten ausgeformten Tiernahrungsmittel ggf. anschließend getrocknet werden, um das halbfeuchte Tiernahrungsmittel zu erhalten. Alternativ kann nach dem Ausformen ein Trocknen, wenn notwendig, erfolgen mit anschließender Portionierung.

Das portionierte, halbfeuchte Tiernahrungsmittel wird anschließend in seine Verpackungseinheit gebracht, d. h. verpackt und diese nach Einbringen des Tiernahrungsmittels im Wesentlichen gasdicht verschlossen.

In einer Ausführungsform wird dabei die in der Verpackungseinheit vorliegende Luft im Wesentlichen, wie mit einem prozentualem Anteil von mindestens 80 % oder mindestens 90 % mit einem Schutzgas, wie N₂, CO₂ oder einer Mischung aus N₂ und CO₂ oder eine andere Kombination der genannten Gase , ausgetauscht, um eine Oxidation zu vermeiden.

Die Verpackungseinheit wird verschlossen. Diese so verschlossene Verpackungseinheit, stellt ein bereits verkaufsfähiges Produkt dar mit den gewünschten Eigenschaften wie Geschmack, Schnittfestigkeit und Struktur. Erfindungsgemäß wird nun diese verschlossene, im Wesentlichen gasdichte Verpackungseinheit mit darin vorliegendem halbfeuchten Tiernahrungsmittel einem Haltbarmachen durch thermische Behandlung unterworfen. Diese thermische Behandlung kann dabei in einer Ausführungsform eine gleichzeitige Druckbehandlung umfassen.

Das so erhaltene, in der Verpackungseinheit vorliegende halbfeuchte Tiernahrungsmittel weist eine lange Haltbarkeit auf.

Durch weiteres Behandeln der bereits verkaufsfähigen und von Geschmack, Struktur und Schnittfestigkeit in gewünschter Art und Weise vorliegenden halbfeuchten Tiernahrungsmittels in ihrer Verpackung mit zusätzlicher thermischer Behandlung und gegebenenfalls Druckbehandlung, ist die gewünschte, längere Haltbarkeit möglich. Die Sterilisation erlaubt die Verlängerung der Haltbarkeit auch in Ausführungsformen, in denen keine Konservierungsmittel in dem halbfeuchten Tiernahrungsmittel vorliegen. Insbesondere zeigte sich überraschend, dass diese zusätzliche thermische Behandlung ggf. mit Druckbehandlung, insbesondere die Sterilisation durch Autoklavieren die Eigenschaften des Verkaufsprodukts in der verschlossenen Verpackungseinheit nicht negativ beeinflussen, Struktur, Geschmack und Schnittfestigkeit bleiben erhalten. Erfindungsgemäß ist es möglich, halbfeuchte Nahrungsmittel mit verlängerter Haltbarkeit bei geringem Vorliegen oder der Abwesenheit von Konservierungsmitteln, wie sie gemäß der Futtermittelverordnung definiert sind, bereitzustellen.

In einer Ausführungsform ist dabei der Schritt des Haltbarmachens einer, der eine Hitzesterilisation durch Dampf oder Wasser beinhaltet. Dem Fachmann sind geeignete Möglichkeiten der Hitzesterilisation bekannt. Die Hitzesterilisation beinhaltet die Behandlung in einem Autoklaven bei thermischer Behandlung mit Überdruck, der auch als Gegendruck bezeichnet werden kann.

In einer Ausführungsform ist dabei der Feuchtegehalt des halbfeuchten Tiernahrungsmittels einer von mindestens 30 Gew.-% bis unter 50 Gew.-%, insbesondere 35 Gew.-% bis 45 Gew.-%. In einer Ausführungsform ist der Feuchtegehalt des halbfeuchten Tiernahrungsmittels in der Verpackungseinheit nach Haltbarmachung mindestens 40 Gew.-%, während bisherige halbfeuchte Tiernahrungsmittel, die im Wesentlichen ohne Konservierungsmittel hergestellt sind, Feuchtegehalte von 27 bis 30 Gew.-% aufweisen. Höhere Feuchtegehalte bei halbfeuchten Tiernahrungsmitteln ohne Konservierungsstoffe sind bisher nicht möglich, ohne die Haltbarkeit dieser halbfeuchten Produkte wesentlich einzuschränken, sodass das erfindungsgemäße Verfahren entsprechend die Bereitstellung von halbfeuchten Tiernahrungsmitteln im Wesentlichen frei von Konservierungsmitteln, mit langer Haltbarkeit, erlaubt. In einem Aspekt ist diese Haltbarkeit eine, von mindestens 15 Monaten, wie mindestens 18 Monaten, insbesondere mindestens 20 Monate, wie insbesondere 24 Monate oder länger.

Das erfindungsgemäße Verfahren ist in einer Ausführungsform eines, bei dem das Tiernahrungsmittel-Vorprodukt einen hohen Anteil an Fleisch aufweist, wobei der Anteil an Fleisch und tierischen Nebenprodukten dabei in einer Ausführungsform mindestens 50 Gew.-%, wie mindestens 70 Gew.-%, mindestens 80 Gew.-%, mindetens 90 Gew.-%, mindestens 95 Gew.-%, wie mindestens 97 Gew.-% bezogen auf die Gesamtmenge an Vorprodukt, ist.

Das erfindungsgemäße Verfahren erlaubt unter anderem den Anteil Protein-, Fett- und/oder Kohlenhydratquellen, z. B. an Fleisch und tierischen Nebenprodukten in dem halbfeuchten Tiernahrungsmittel zu erhöhen ohne dessen Haltbarkeit zu verringern.

In dem erfindungsgemäß erhältlichen halbfeuchten Tiernahrungsmittel ist der Anteil an Fleisch, Fisch, Gemüse oder Insekten dabei einer von mindestens 50 Gew.-%, wie mindestens 70 Gew.-%, mindestens 80 Gew.-%, mindestens 90 Gew.-%, wie mindestens 95 Gew.-%, z. B. mindestens 97 Gew.-%, entsprechend den im Tiernahrungsmittel-Vorprodukt vorliegenden Bestandteilen.

In einem weiteren Aspekt ist das Verfahren eines, bei dem das Vorprodukt zur Herstellung des halbfeuchten Tiernahrungsmittels weniger als 1 Gew.-% Salz, wie weniger als 0,8 Gew.-% Salz hinzugefügt wird. Bei dem Salz handelt es sich insbesondere um ein Natriumchlorid. Diese Salze umfassen insbesondere keine Konservierungsstoffe und insbesondere keine Nitritsalze, wie sie sonst zur Haltbarmachung und Umrötung von Fleisch verwendet werden.

Vielmehr handelt es sich bei den hinzugefügten Salzen, insbesondere Natriumchlorid, um Mineralstoffe, wie sie gemäß Futtermittelverordnung definiert sind.

Neben dem genannten Fleisch enthält das Tiernahrungsmittel-Vorprodukt insbesondere kein Nitritsalz. Es kann aber weitere Bestandteile enthalten, wie Aromastoffe, Stärke und Kochsalz

Weiterhin können in der Futtermittelindustrie übliche Zusatzstoffe beigefügt werden, insbesondere Aromen, natürliche und synthetische Farbstoffe, inaktive Hefe oder Hefeextrakte, Pflanzenextrakte und -konzentrate, insbesondere Gemüseextrakte (insbesondere dann, wenn der Hauptbestandteil Fleisch, Fisch oder Insekten sind). Darüber hinaus können in einer Ausführungsform funktionelle Zutaten, wie beispielsweise Probiotika zugesetzt werden, hierunter werden u. a. Vitamine und Mineralstoffe, Omega-3-Fettsäuren, probiotische Ballaststoffe und probiotische Mikroorganismen verstanden.

Das erfindungsgemäße Verfahren mit seinen Schritten der optionalen Trocknung und zusätzlichen Haltbarmachung durch Temperatur- und ggf. Druckbeaufschlagung des Tiernahrungsmittels in der im Wesentlichen gasdichten Verpackungseinheit beinhaltet den ggf. notwendigen Schritt des Trocknens auf den gewünschten Feuchtegehalt, nämlich gemäß Schritt b) wie oben aufgeführt, wobei diese Trocknung eine bei einer Temperatur von 70°C bis 95°C, wie 80°C bis 90°C ist und die Trocknung für einen Zeitraum erfolgt, der ausreicht, um den gewünschten Feuchtegehalt zu erhalten. Übliche Zeiträume der Trocknung sind: 1 - 8 Stunden je nach Rezeptur Gewicht und Durchmesser des Produktes.

Das erfindungsgemäße Verfahren ist insbesondere in einer Ausführungsform eines, bei dem das halbfeuchte Tiernahrungsmittel im Schritt d) derart haltbar gemacht wird, der eine thermischen Behandlung mit Überdruck, wie einer Wasserdampfsterilisation, unterworfen wird. Dieser Überdruck oder Gegendruck mit einem Druck über den Normaldruck ist z. B. einer von 0,3 bar bis 5 bar, wie 2,5 bar bis 4,5 bar.

Der erfindungsgemäße Schritt des Haltbarmachens durch thermische Behandlung und ggf. Druckbehandlung, insbesondere durch Dampfsterilisation, z. B. in einem Autoklaven, erlaubt die Optik des erhaltenen halbfeuchten Tiernahrungsmittelproduktes zu verbessern. Insbesondere die optisch ansprechende Rötung des Produktes ist möglich, sodass das Aussehen des Produktes ansprechend wird und dem von frischem Fleisch entspricht. Es zeigte sich, dass durch diesen letzten Schritt der Haltbarmachung mittels insbesondere Hitze-, wie Dampfsterilisation die Farbe des ansonsten in grau vorliegenden Produktes in einen optisch ansprechenden Rotton, wie einen Rotbraunton überführt wird.

In einer Ausführungsform betrifft das erfindungsgemäße Verfahren eines zur Herstellung und Haltbarmachung eines halbfeuchten Tiernahrungsmittels, umfassend die Schritte
a. Bereitstellen eines Tiernahrungsmittel-Vorprodukts, z. B. eines umfassend mindestens 50 Gew.-%, wie mindestens 70 Gew.-%, mindestens 80 Gew.-%, mindestens 95 Gew.-% Fleisch und tierische Nebenprodukte, Fisch und Fischnebenerzeugnisse und/oder Gemüse und/oder Insekten, nicht mehr als 1 Gew.-% Salz, insbesondere als 1 Gew.-% Kochsalz, Stärke, insbesondere Erbsenstärke;
b. Ein Zerkleinern, insbesondere ein Kuttern, und Ausformen eines Tiernahrungsmittel-Vorprodukts und gegebenenfalls Trocknen des ausgeformten Tiernahrungsmittel-Vorprodukts, um ein halbfeuchtes Tiernahrungsmittel mit einem Feuchtegehalt von 30 Gew.-% bis 45 Gew.-% zu erhalten;
c. Verpacken des halbfeuchten Tiernahrungsmittels mit einem Feuchtegehalt von zwischen 30 Gew.-% bis 45 Gew.-% in eine im Wesentlichen gasdichte Verpackungseinheit;
d. Dampfsterilisieren des halbfeuchten Tiernahrungsmittels verpackt in der im Wesentlichen gasdichten Verpackungseinheit, um ein haltbares halbfeuchtes Tiernahrungsmittel zu erhalten.

In einem weiteren Aspekt wird ein halbfeuchtes Tiernahrungsmittel bereitgestellt, erhältlich mit dem erfindungsgemäßen Verfahren. Bei diesem halbfeuchten Tiernahrungsmittel handelt es sich um eines, das in einer im Wesentlichen gasdichten Verpackungseinheit vorliegt, erhältlich mit dem erfindungsgemäßen Verfahren.

Das erfindungsgemäße halbfeuchte Tiernahrungsmittel zeichnet sich dadurch aus, dass dieses eine Haltbarkeit von mindestens 15 Monaten, wie mindestens 18 Monaten als auch mindestens 20 Monaten, wie mindestens 24 Monaten aufweist. In einem weiteren Aspekt ist das erfindungsgemäße halbfeuchte Tiernahrungsmittel in einer Ausführungsform mit Fleisch als wesentlichem Tiernahrungsmittel-Vorprodukt eines, das einen Fettgehalt von unter 10 Gew.-% im halbfeuchten Tiernahrungsmittel aufweist. Im Gegensatz zu den bisherigen, auf dem Markt befindlichen Produkten mit Fleisch, die üblicherweise einen Fettgehalt von 18 bis 22 Gew.-% aufweisen, erlaubt das erfindungsgemäße Verfahren die Bereitstellung von erfindungsgemäßen halbfeuchten Tiernahrungsmitteln mit einem Fettgehalt von 10 Gew.-% oder weniger.

In einer weiteren Ausführungsform weist das erfindungsgemäße halbfeuchte Tiernahrungsmittel, erhältlich gemäß dem erfindungsgemäßen Verfahren, einen Aschegehalt von unter 5 Gew.-% auf. Der Aschegehalt ist z. B. von einem Bereich von 3 Gew.-% bis 5 Gew.-%. Dies erlaubt die Bereitstellung halbfeuchter Tiernahrungsmittel mit ernährungsphysiologisch für fleischfressende Tiere besonders günstigen Eigenschaften, wobei erfindungsgemäß diese eine besonders lange Haltbarkeit aufweisen.

Die thermische bzw. Druckbehandlung kann alternativ auch eine Strahlbehandlung sein, z. B. eine Radiowellenbehandlung. Bei Verwendung entsprechender elektromagnetischer Strahlung zur Haltbarmachung muss dabei entsprechend das Verpackungsmaterial der Verpackungseinheit berücksichtigt werden.

In einer Ausführungsform ist das erfindungsgemäße halbfeuchte Tiernahrungsmittel in Form eines Sticks, insbesondere eines Kausticks, ausgebildet.

In einer Ausführungsform ist die Verpackungseinheit für das halbfeuchte Tiernahrungsmittel in Form eines Schlauchbeutels ausgebildet. Das Material der Verpackungseinheit ist dabei eines, das im Wesentlichen gasdicht abschließt, sodass bei z. B. Dampfsterilisation keine Feuchte in das Innere der Verpackungseinheit dringt und umgekehrt, keine Feuchte aus der Verpackungseinheit austritt.

Unter dem Ausdruck "im Wesentlichen gasdicht" bzw. "gasdicht" wird vorliegend verstanden, dass die Sauerstoffdurchlässigkeit und Wasserdampfdurchlässigkeit gering ist. Z. B. ist die Sauerstoffdurchlässigkeit > 0,1 cm³/m²*d*bar, bestimmt gemäß DIN 53380 bzw. ISO 2556 bei 23°C und 50 % Raumfeuchte. Für die Wasserdampfdurchlässigkeit ist bei diesen im Wesentlichen gasdichten Verschließen die Wasserdampfdurchlässigkeit > 0,1 g/m³*d, bestimmt z. B. gemäß DIN 53122 / ISO 1195 bei 23°C und 85 % Raumfeuchte.

Dem Fachmann sind entsprechende Verfahren zur Bestimmung der Sauerstoff- und Wasserstoffdurchlässigkeit und gasdichte geeignete Materialien bekannt.

Weiterhin betrifft die vorliegende Erfindung Verkaufseinheiten von mindestens zwei Verpackungseinheiten, wobei diese lösbar miteinander verbunden sein können. Diese Verpackungseinheiten sind z. B. lösbar durch geschwächte Bereiche, wie Perforation oder entsprechende Änderungen der miteinander verbundenen Materialien, sodass einzelne Verpackungseinheiten mit einem darin enthaltenen halbfeuchten Tiernahrungsmittel abgetrennt werden können. Diese Verkaufseinheiten mit mindestens zwei miteinander lösbar verbundenen Verpackungseinheiten erlauben den Verkauf einer Vielzahl von einzelverpackten halbfeuchten Tiernahrungsmitteln. Aufgrund der längeren Haltbarkeit sind entsprechende Verkaufseinheiten mit einer Vielzahl von mindestens zwei, wie drei, vier, fünf, sechs, sieben, acht, mindestens zehn Verpackungseinheiten, enthaltend das erfindungsgemäße halbfeuchte Tiernahrungsmittel, möglich.

Alternativ kann das erfindungsgemäße halbfeuchte Tiernahrungsmittel in der Verpackungseinheit vorliegend als Verkaufseinheit auch mit anderen Futtermittelprodukten vereint und z. B. als gemischte Futtermittel angeboten werden. In einer Ausführungsform handelt es sich bei dem halbfeuchten Tiernahrungsmittel insbesondere um solche für Hunde, Katzen oder Koj. Diese halbfeuchten Tiernahrungsmittel können dabei als Vollfutter oder in Form von Snacks entsprechend vorliegen.

Im Folgenden wird die Erfindung anhand eines Ausführungsbeispiels näher beschrieben, das lediglich zur Veranschaulichung einer möglichen Ausführungsform dient und in keiner Weise schutzbeschränkend sein soll.

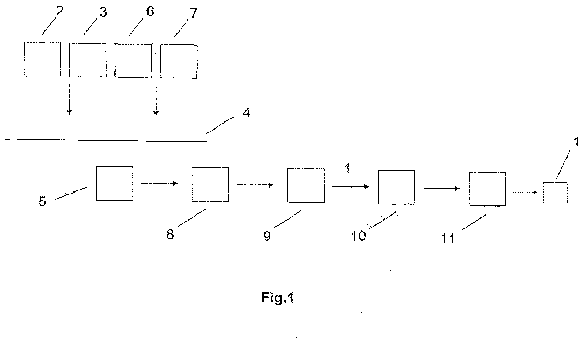

Dabei wird in der Figur 1 schematisch die Herstellung eines erfindungsgemäßen halbfeuchten Tiernahrungsmittels vorliegend auf Basis eines Fleischprodukts dargestellt.

In einem ersten Schritt werden Tiernahrungsmittel-Vorprodukte umfassend 95 Gew.- % Fleisch und tierische Nebenprodukte (alternativ sind auch Insektenprodukte, Fischprodukte oder pflanzliche Produkte denkbar) mit nicht mehr als 1 Gew.-% Salz, insbesondere nicht mehr als 1 Gew.-% Kochsalz, und darüber hinaus weitere Bestandteile, wie Stärke oder Erbsenstärke und -pulver in einen Kutter 5 als Mittel zum Zerkleinern gegeben. Diese Zutaten befinden sich z. B. in den Behältern 2 und ggf. 3, falls getrennte Behälter z. B. für Fleisch unterschiedlicher Tierarten vorgesehen sind, und werden dem dortigen Kutter 5 zugeführt. Darüber hinaus befinden sich in weiteren Behältern (6,7) weitere Bestandteile, wie Gemüse, etc., die den fleischigen Zutaten zugesetzt werden können. Weitere Behältnisse, z. B. für Salze etc., deren Inhalte über Zuläufe in den Kutter 5 gelangen können, sind in der Abbildung nicht dargestellt.

Erfindungsgemäß ist insbesondere nicht vorgesehen, zu diesem Zeitpunkt oder einem anderen Zeitpunkt in der Herstellung Konservierungsstoffe hinzuzugeben.

Ggf. kann z. B. eine Lochscheibe 4 vor dem Kutter vorgeschaltet sein, um eine Zerkleinerung der fleischigen Zutaten zu erlauben.

Nach dem Zerkleinern wird die so erhaltene Emulsion zu dem Former 8 zur Ausformung zugeführt. Vom Former 8 wird das ausgeformte Tiernahrungsmittel-Vorprodukt, wenn notwendig, dem Trockner 9 zugeführt und dort auf einen Feuchtegehalt von z. B. 30 bis 45 Gew.-% getrocknet, um ein halbfeuchtes Tiernahrungsmittel zu erhalten.

Nach dem Trocknen oder alternativ nach dem Ausformen wird das halbfeuchte Tiernahrungsmittel einer Verpackungseinrichtung / Abpackeinrichtung 10 zugeführt, bei der das halbfeuchte Tiernahrungsmittel in eine im Wesentlichen gasdichte Verpackung verpackt wird. Nach dem Verpacken wird diese das halbfeuchte Tiernahrungsmittel enthaltene Verpackungseinheit einer Haltbarmachung z. B. durch Dampfsterilisation 11 zugeführt, um schließlich das verpackte haltbare halbfeuchte Tiernahrungsmittel 1 zu erhalten.

Bei der Dampfsterilisation wird z. B. die Sterilisation bei einem Gegendruck von 0,3 bis 5 bar, wie 2,5 bis 4 bar über Normaldruck durchgeführt.

Das so erhaltene Endprodukt weist eine hervorragende Haltbarkeit von mindestens 24 Monaten bis 36 Monaten auf, wobei keine Konservierungsstoffe in dem Produkt enthalten sind.

### Bezugszeichenliste

- 1: Verpackungseinheit mit halbfeuchtem Tiernahrungsmittel
- 2: Behälter
- 3: Behälter
- 4: Lochscheibe
- 5: Kutter
- 6: Behälter
- 7: Behälter
- 8: Former
- 9: Trockner
- 10: Abpackeinrichtung
- 11: Dampfsterilisation

## Patentansprüche

1. Verfahren zur Herstellung und Haltbarmachung eines halbfeuchten Tiernahrungsmittels, umfassend die Schritte:
a. Bereitstellen eines Tiernahrungsmittel-Vorprodukts;
b. Zerkleinern und Ausformen des Tiernahrungsmittel-Vorprodukts und gegebenenfalls Trocknen des ausgeformten Tiernahrungsmittel-Vorprodukts, um ein halbfeuchtes Tiernahrungsmittel mit einem Feuchtegehalt von > 15 Gew.-% und < 50 Gew.-% zu erhalten;
c. Verpacken des halbfeuchten Tiernahrungsmittels in einer im Wesentlichen gasdichten Verpackungseinheit;
d. Haltbarmachen durch thermische Behandlung und ggf. Druckbehandlung, zum Erhalt eines in einer Verpackungseinheit vorliegenden haltbaren halbfeuchten Tiernahrungsmittels.

2. Verfahren zur Herstellung und Haltbarmachung eines halbfeuchten Tiernahrungsmittels nach Anspruch 1, wobei der Schritt des Haltbarmachens den Schritt der Dampfsterilisation beinhaltet, insbesondere in einem Autoklaven unter thermischer Behandlung mit Überdruck.

3. Verfahren zur Herstellung und Haltbarmachung eines halbfeuchten Tiernahrungsmittels nach einem der vorherigen Ansprüche, umfassend i) eine Bereitstellung des Tiernahrungsmittel-Vorprodukts mit mindestens 50 Gew.-%, wie mindestens 70 Gew.-%, mindestens 80 Gew.-%, mindestens 90 Gew.-%, wie mindestens 95 Gew.-%, wie mindestens 97 Gew.-% Fleisch und tierischen Nebenprodukten oder ii) die Bereitstellung des Tiernahrungsmittel-Vorprodukts im Wesentlichen enthaltend Gemüse und/oder Gemüsebestandteile, wie mindestens über 50 Gew.-%, mindestens 70 Gew.- %, mindestens 80 Gew.-%, wie mindestens 90 Gew.-% Gemüse und/oder Gemüsebestandteile, oder iii) die Bereitstellung des Tiernahrungsmittel-Vorprodukts im Wesentlichen enthaltend Insekten und/oder Insektenbestandteile, wie mindestens über 50 Gew.-%, mindestens 70 Gew.- %, mindestens 80 Gew.-%, wie mindestens 90 Gew.-% Insekten und/oder Insektenbestandteile, oder iv) die Bereitstellung des Tiernahrungsmittel-Vorprodukts im Wesentlichen enthaltend Fisch und/oder Fischnebenerzeugnissen, wie mindestens über 50 Gew.-%, mindestens 70 Gew.-%, mindestens 80 Gew.-%, wie mindestens 90 Gew.-% Fisch und/oder Fischnebenerzeugnissen.

4. Verfahren zur Herstellung und Haltbarmachung eines halbfeuchten Tiernahrungsmittels, wobei die Bereitstellung des Tiernahrungsmittel-Vorprodukts ein Tiernahrungsmittel-Vorprodukt umfasst mit weniger als 1 Gew.-% Salz, wie weniger als 0,8 Gew.-% Salz, insbesondere wobei das Salz Natriumchlorid ist.

5. Verfahren zur Herstellung und Haltbarmachung eines halbfeuchten Tiernahrungsmittels nach einem der vorherigen Ansprüche, wobei der optionale Schritt der Trocknung eine Trocknung auf einen Feuchtegehalt von mindestens 30 Gew.-% bis unter 50 Gew.-%, insbesondere 35 Gew.-% bis 45 Gew.-% ist.

6. Verfahren zur Herstellung und Haltbarmachung eines halbfeuchten Tiernahrungsmittels nach einem der vorherigen Ansprüche, wobei das Tiernahrungsmittel-Vorprodukt gemäß Schritt a) kein Nitritsalz aufweist.

7. Verfahren zur Herstellung und Haltbarmachung eines halbfeuchten Tiernahrungsmittels nach einem der vorherigen Ansprüche, wobei optionales Trocknen auf den gewünschten Feuchtegehalt gemäß Schritt b) bei einer Temperatur von 70 bis 95°C, wie 80 bis 90°C erfolgt.

8. Verfahren zur Herstellung und Haltbarmachung eines halbfeuchten Tiernahrungsmittels nach einem der vorherigen Ansprüche, wobei die Haltbarmachung gemäß Schritt e) eine thermische Behandlung mit Überdruck wie eine Wasserdampfsterilisation bei einem Druck über den Normaldruck von 0,3 bar bis 5 bar, wie 3,5 bar bis 4 bar umfasst.

9. Verfahren zur Herstellung und Haltbarmachung eines halbfeuchten Tiernahrungsmittels nach einem der vorherigen Ansprüche, umfassend die Schritte
a. Bereitstellen eines Tiernahrungsmittel-Vorprodukts umfassend mindestens 50 Gew.-%, wie mindestens 70 Gew.-%, mindestens 80 Gew.-%, mindestens 90 Gew.-%, mindestens 95 Gew.-% Fleisch und tierische Nebenprodukte, nicht mehr als 1 Gew.-% Salz, insbesondere als 1 Gew.-% Kochsalz, Stärke, insbesondere Erbsenstärke und bevorzugt keine Konservierungsmittel enthält;
b. Ein Zerkleinern, insbesondere ein Kuttern, und Ausformen eines Tiernahrungsmittel-Vorprodukts und gegebenenfalls Trocknen des ausgeformten Tiernahrungsmittel-Vorprodukts, um ein halbfeuchtes Tiernahrungsmittel mit einem Feuchtegehalt von > 15 Gew.-% und < 50 Gew.-% zu erhalten;
c. Verpacken des halbfeuchten Tiernahrungsmittels mit einem Feuchtegehalt von zwischen 30 Gew.-% bis 45 Gew.-% in eine im Wesentlichen gasdichte Verpackungseinheit;
d. Dampfsterilisieren des halbfeuchten Tiernahrungsmittels, verpackt in der im Wesentlichen gasdichten Verpackungseinheit, um ein haltbares halbfeuchtes Tiernahrungsmittel zu erhalten.

10. Halbfeuchtes Tiernahrungsmittel in einer wesentlichen gasdichten Verpackungseinheit, vorliegend erhältlich nach einem der Ansprüche 1 bis 9.

11. Halbfeuchtes Tiernahrungsmittel nach Anspruch 10, wobei dieses eine Haltbarkeit von mindestens 15 Monaten, wie mindestens 18 Monaten, insbesondere 20 Monaten aufweist.

12. Halbfeuchtes Tiernahrungsmittel nach einem der Ansprüche 10 oder 11, **dadurch gekennzeichnet, dass** es einen Fettgehalt von unter 10 Gew.-% aufweist und/oder ein Aschegehalt von unter 5 Gew.-%, wie zwischen 3 Gew.-% und 5 Gew.-% hat.

13. Halbfeuchtes Tiernahrungsmittel nach einem der Ansprüche 10 bis 12, **dadurch gekennzeichnet, dass** es in einer Schlauchbeutelverpackung verpackt ist und/oder wobei dieses in der Form eines Sticks, insbesondere eines Kausticks ausgebildet ist.

14. Halbfeuchtes Tiernahrungsmittel nach einem der Ansprüche 10 bis 13, wobei pro Verpackungseinheit ein einzelnes halbfeuchtes Tiernahrungsmittelprodukt vorliegt.

15. Verkaufseinheit umfassend mehrere ggf. voneinander lösbare Verpackungseinheiten enthaltend das halbfeuchte Tiernahrungsmittel erhältlich nach einem Verfahren gemäß der Ansprüche 1 bis 9 oder gemäß einem der Ansprüche 10 bis 14.
